# EUROPEAN PATENT APPLICATION

(11) **EP 2 393 034 A2**
(43) Date of publication of application: **07.12.2011**
(21) Application number: 11168064.1
(22) Date of filing: 30.05.2011
(51) Int. Cl.: G06K 7/10

(54) **Bar code decoding device**

(30) Priority: 01.06.2010 CN 201010189845; 01.06.2010 CN 201010189854; 01.06.2010 CN 201010188977; 01.06.2010 CN 201010188989
(71) Applicant: Fujian Newland Computer Co., Ltd., Fuzhou Fujian (CN)
(72) Inventor: Cai, Qiang, Fuzhou Fujian (CN); Lin, Jianhua, Fuzhou Fujian (CN); Wu, Jun, Fuzhou Fujian (CN); Cai, Chunshui, Fuzhou Fujian (CN); Liu, Feng, Fuzhou Fujian (CN); Zhang, Yijin, Fuzhou Fujian (CN); Cai, Xiaodan, Fuzhou Fujian (CN); Wu, Zhiyu, Fuzhou Fujian (CN); Wu, Minghui, Fuzhou Fujian (CN); Chen, Yongchang, Fuzhou Fujian (CN)
(74) Representative: Viering, Jentschura & Partner

(57) **Abstract**

An exemplary bar code decoding unit includes an interface unit. The bar code image is input into the bar code decoding unit via the interface unit, and the bar code decoding unit decodes the bar code image and outputs decoded information via its interface unit.

## Description

### CROSS-REFERENCE TO RELATED APPLICATIONS

The present Utility patent application claims priority benefit of the Chinese patent applications 201010189845.1, filed on June 1st, 2010, entitled "BAR CODE DECODING DEVICE BASED ON THE USB INTERFACE", 201010189854.0, filed on June 1st, 2010, entitled "BARCODE DECODING METHOD AND APPARATUS", 201010188977.2, filed on June 1st, 2010, entitled "A BARCODE DECODER CHIP AND BAR CODE DECODING DEVICE BASED ON THE VIRTUAL INTERFACE", 201010188989.5, filed on June 1st, 2010, entitled "BARCODE DECODING DEVICE OF MEMORY CARD TYPE" under 35 U.S.C. 119(a). The contents of this related patent application is incorporated herein by reference for all purposes to the extent that such subject matter is not inconsistent herewith or limiting hereof.

### TECHNICAL FIELD

The present disclosure generally relates to a decoding device, more specifically to a bar code decoding device.

### BACKGROUND

The following background information may present examples of specific aspects of the prior art (e.g., without limitation, approaches, facts, or common wisdom) that, while expected to be helpful to further educate the reader as to additional aspects of the prior art, is not to be construed as limiting the present invention, or any embodiments thereof, to anything stated or implied therein or inferred thereupon.

The available bar code decoding device requires a special bar code decoding processor and processing circuit so as to realize the decoding function, and the device is large with poor versatility. The available portable electronic device requires modification to its internal structure and processing program to integrate with the available bar code decoding device, which increases the manufacturing cost and utilization cost of the portable electronic device, furthermore, a common portable electronic device has difficulty realizing the bar code decoding function without modification to the device, which limits its application in the field of bar code technology.

What is needed, therefore, is a portable bar code decoding device integrated with the available bar code decoding device without modification to the device.

### BRIEF DESCRIPTION OF THE DRAWINGS

The present invention is illustrated by way of example, and not by way of limitation, in the figures of the accompanying drawings and in which like reference numerals refer to similar elements and in which:

FIG. 1 illustrates a schematic block diagram of an exemplary bar code decoding device according to a first embodiment of the present invention.

FIG. 2 illustrates a schematic block diagram of an exemplary bar code decoding device according to a second embodiment of the present invention.

FIG. 3 illustrates a schematic block diagram of an exemplary bar code decoding device according to a third embodiment of the present invention.

FIG. 4 illustrates a schematic block diagram of an exemplary bar code decoding device according to a fourth embodiment of the present invention.

FIG. 5 illustrates a schematic block diagram of an exemplary bar code decoding device according to a fifth embodiment of the present invention.

Unless otherwise indicated illustrations in the figures are not necessarily drawn to scale.

### DETAILED DESCRIPTION OF EMBODIMENTS

The present invention is best understood by reference to the detailed figures and description set forth herein.

Embodiments of the invention are discussed below with reference to the Figures. However, those skilled in the art will readily appreciate that the detailed description given herein with respect to these figures is for explanatory purposes as the invention extends beyond these limited embodiments. For example, it should be appreciated that those skilled in the art will, in light of the teachings of the present invention, recognize a multiplicity of alternate and suitable approaches, depending upon the needs of the particular application, to implement the functionality of any given detail described herein, beyond the particular implementation choices in the following embodiments described and shown. That is, there are numerous modifications and variations of the invention that are too numerous to be listed but that all fit within the scope of the invention. Also, singular words should be read as plural and vice versa and masculine as feminine and vice versa, where appropriate, and alternative embodiments do not necessarily imply that the two are mutually exclusive.

It is to be further understood that the present invention is not limited to the particular methodology, compounds, materials, manufacturing techniques, uses, and applications, described herein, as these may vary. It is also to be understood that the terminology used herein is used for the purpose of describing particular embodiments only, and is not intended to limit the scope of the present invention. It must be noted that as used herein and in the appended claims, the singular forms "a," "an," and "the" include the plural reference unless the context clearly dictates otherwise. Thus, for example, a reference to "an element" is a reference to one or more elements and includes equivalents thereof known to those skilled in the art. Similarly, for another example, a reference to "a step" or "a means" is a reference to one or more steps or means and may include sub-steps and subservient means. All conjunctions used are to be understood in the most inclusive sense possible. Thus, the word "or" should be understood as having the definition of a logical "or" rather than that of a logical "exclusive or" unless the context clearly necessitates otherwise. Structures described herein are to be understood also to refer to functional equivalents of such structures. Language that may be construed to express approximation should be so understood unless the context clearly dictates otherwise.

Unless defined otherwise, all technical and scientific terms used herein have the same meanings as commonly understood by one of ordinary skill in the art to which this invention belongs. Preferred methods, techniques, devices, and materials are described, although any methods, techniques, devices, or materials similar or equivalent to those described herein may be used in the practice or testing of the present invention. Structures described herein are to be understood also to refer to functional equivalents of such structures. The present invention will now be described in detail with reference to embodiments thereof as illustrated in the accompanying drawings.

From reading the present disclosure, other variations and modifications will be apparent to persons skilled in the art. Such variations and modifications may involve equivalent and other features which are already known in the art, and which may be used instead of or in addition to features already described herein.

Although Claims have been formulated in this Application to particular combinations of features, it should be understood that the scope of the disclosure of the present invention also includes any novel feature or any novel combination of features disclosed herein either explicitly or implicitly or any generalization thereof, whether or not it relates to the same invention as presently claimed in any Claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable subcombination. The Applicants hereby give notice that new Claims may be formulated to such features and/or combinations of such features during the prosecution of the present Application or of any further Application derived therefrom.

References to "one embodiment," "an embodiment," "example embodiment," "various embodiments," etc., may indicate that the embodiment(s) of the invention so described may include a particular feature, structure, or characteristic, but not every embodiment necessarily includes the particular feature, structure, or characteristic. Further, repeated use of the phrase "in one embodiment," or "in an exemplary embodiment," do not necessarily refer to the same embodiment, although they may.

As is well known to those skilled in the art many careful considerations and compromises typically must be made when designing for the optimal manufacture of a commercial implementation any system, and in particular, the embodiments of the present invention. A commercial implementation in accordance with the spirit and teachings of the present invention may configured according to the needs of the particular application, whereby any aspect(s), feature(s), function(s), result(s), component(s), approach(es), or step(s) of the teachings related to any described embodiment of the present invention may be suitably omitted, included, adapted, mixed and matched, or improved and/or optimized by those skilled in the art, using their average skills and known techniques, to achieve the desired implementation that addresses the needs of the particular application.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

All the features disclosed in this specification, including any accompanying abstract and drawings, may be replaced by alternative features serving the same, equivalent or similar purpose, unless expressly stated otherwise. Thus, unless expressly stated otherwise, each feature disclosed is one example only of a generic series of equivalent or similar features.

Reference will now be made to the drawings to describe preferred and exemplary embodiments of the present disclosure in detail.

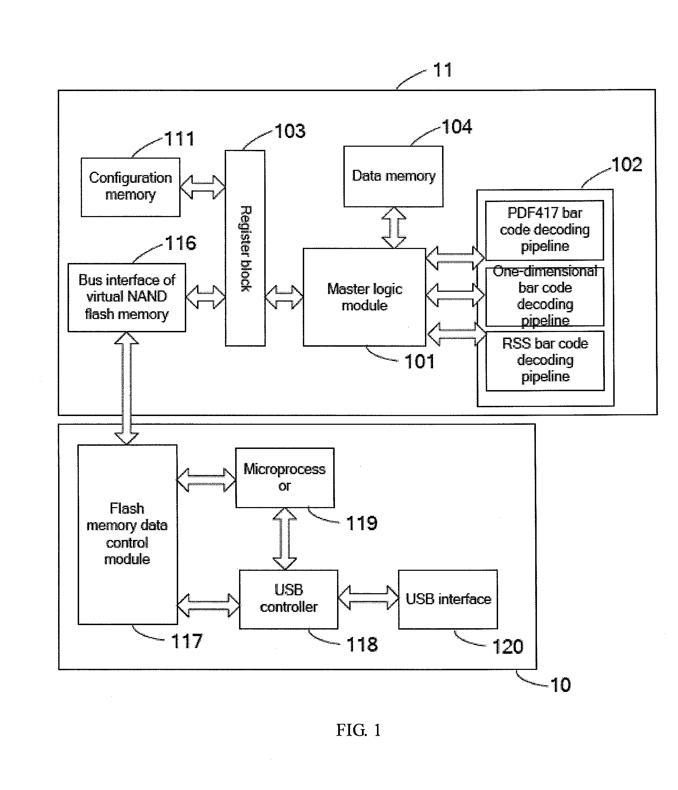

FIG. 1 illustrates a schematic block diagram of an exemplary bar code decoding device according to a first embodiment of the present invention. The bar code decoding device of the implementation example mainly includes USB interface unit 10 and bar code decoding unit 11.

In the implementation example, bar code decoding unit 11 includes bus interface 116 of virtual NAND flash memory, configuration memory 111, register block 103, master logic module 101, bar code decoding pipeline 102 and data memory 104. In which, bar code decoding pipeline 102 includes PDF417 bar code decoding pipeline, one-dimensional bar code decoding pipeline and RSS (Reduced Space Symbology) bar code decoding pipeline. Different bar code decoding pipelines may be used for processing bar code images of different formats. Selective preference is realized by hardware logic.

Data memory 104 is used for storing the bar code image obtained from exterior of bar code decoding unit 11, which, by way of example and not limitation, can be specifically realized by RAM (random access memory).

Master logic module 101 can trigger specific events based on specific commands. Desired control states can, by way of example and not limitation, be chosen by triggering the setting switch (not shown) connected to master logic module 101 or obtaining external commands from bus interface 116 of virtual NAND flash memory, such as, obtaining the bar code image from data memory 104 and transferring it to bar code decoding pipeline 102 and so on. Master logic module 101 revealed by the present invention has no computing function, but only triggers the corresponding event under certain conditions, which can, by way of example and not limitation, be specifically realized by the state machine.

Bus interface 116 of virtual NAND flash memory is connected to external circuit (USB interface unit 10) of bar code decoding unit 11 and communicates with it to transfer data in the interface standard of NAND flash memory. An external circuit inputs commands and the bar code image through bus interface 116 of virtual NAND flash memory.

Register block 103 is set between bus interface 116 of virtual NAND flash memory and master logic module 101, which, by way of example and not limitation, includes a series of user-defined registers, including a state register, which, by way of example and not limitation, may be used for displaying the operating state of master logic module 101, a data register, which is used for the temporary storage of data, and a command register, which is used for the temporary storage of commands, and other registers. Master logic module 101 can read data from the data register, read commands from the command register and act specifically according to specific commands, including commands input from bus interface 116 of virtual NAND flash memory. Bar code decoding pipeline 102 is separated from the external circuit by register block 103 and master logic module 101, which, by way of example and not limitation, in many practical applications, may make it convenient for future upgrading of bar code decoding pipeline 102 (such as adding more bar code decoding pipelines able to process other formats and types).

In addition, configuration memory 111 is electrically connected to register block 103 and may be used for storing operation parameters and table look-up data (such as the code list necessary for the decoding operation) during operation of bar code decoding pipeline 102, which can obtain the above data from configuration memory 111 through master logic module 101 and register block 103. It must be ensured that data will not be lost in case of power failure. By way of example and not limitation, this can be realized through available EEPROM (Electrically Erasable Programmable Read-Only Memory). In some cases, configuration memory 111 can be directly set in bar code decoding pipeline 102.

When the bar code image is input into the data register of register block 103 through bus interface 116 of virtual NAND flash memory, master logic module 102 can obtain the bar code image from the data register and store it into data memory 104. When master logic module 102 reads processing command from the command register of register block 103, the bar code image in data memory 104 can be transferred to bar code decoding pipeline 102 for processing. Bar code decoding pipeline 102 can conduct a series of decoding operations on the bar code image, such as image preprocessing, grayscale extraction, binaryzation, code word reading, and decoding processing, etc.

It shall be noted that, bar code decoding pipeline 102 includes bar code decoding pipelines suitable for decoding different bar code types including, by way of example and not limitation, a PDF417 bar code decoding pipeline, a one-dimensional bar code decoding pipeline and a RSS bar code decoding pipeline. Those skilled in the art, depending upon the needs of the particular application, and in light of the teachings of the present invention, will readily recognize a multiplicity of alternative and suitable bar code types that the present embodiment may be configured to properly decode.

In accordance with the present embodiment, after obtaining the bar code image, taking a one-dimensional bar code as an example, without limitation, the one-dimensional bar code image is transferred to the above three bar code decoding pipelines for parallel processing; however, the correct bar code information will be output from the one-dimensional bar code decoding pipeline which is consistent with its format. Those skilled in the art, depending upon the needs of the particular application, and in light of the teachings of the present invention, will readily recognize that the bar code decoding pipeline of one format or multiple formats can be set as required depending upon the needs of the particular application.

Due to inconsistency with the format of the one-dimensional bar code image, the PDF417 bar code decoding pipeline and the RSS bar code decoding pipeline can not process it and output the correct bar code information after receiving the one-dimensional bar code image. Similarly, bar code decoding pipeline 102 can process PDF417 bar code image and RSS bar code image as above. Certainly, master logic module 102 can also only control one bar code decoding pipeline among multiple bar code decoding pipelines to process the input bar code image according to the selection of the user.

In addition, if three bar code images of A, B, C are successively obtained from bus interface 116 of virtual NAND flash memory to data memory 104, and the three bar code images of A, B, C correspond to three different types of bar code formats: PDF417 bar code, RSS bar code and one-dimensional bar code, then the three bar code images can be provided to bar code decoding pipeline 102 from data memory 104 according to the obtained precedence order, at the same time, PDF417 bar code decoding pipeline, one-dimensional bar code decoding pipeline and RSS bar code decoding pipeline will first parallel process bar code image A, and the result is: PDF417 bar code decoding pipeline will process bar code image A and output the correct bar code information, while the other two bar code decoding pipelines can not process bar code image A. During processing of bar code image A by PDF417 bar code decoding pipeline, if one-dimensional bar code decoding pipeline and RSS bar code decoding pipeline has confirmed that A can not be processed, they will try to process bar code image B, in which, RSS bar code decoding pipeline will process bar code image B and output the correct bar code information. During processing of bar code image A by PDF417 bar code decoding pipeline and processing of bar code image B by RSS bar code decoding pipeline, if the one-dimensional bar code decoding pipeline has confirmed that bar code image B can not be processed, it will try to process bar code image C. As the format is consistent, the one-dimensional bar code decoding pipeline is able to process image C and output the correct bar code information.

In many practical applications, without limitation, because processing of the second bar code image does not need to wait until completion of the first bar code image, and so also does the third bar code image, the above parallel processing method of bar code images can greatly improve the processing speed of different types of bar code images.

Bar code information output from bar code decoding pipeline 102 can be stored into data memory 104 by master logic module 101 and in case of necessary output, it can be stored into the data register from data memory 104. Those skilled in the art, depending upon the needs of the particular application, and in light of the teachings of the present invention, will readily recognize that the bar code information output from bar code decoding pipeline 102 can be directly stored into the data register. Bar code information stored into the data register can be transferred to the external circuit via bus interface 116 of virtual NAND flash memory.

Bus interface 116 of virtual NAND flash memory adopted in the present invention includes a standard NAND flash memory interface, mainly including the following pins: I/O0-I/O7, CLE, ALE, CS, WE, RE, whose functions are shown, by way of example and not limitation, in the following Table 1.1.

**Table 1.1:**

| Name of pin | Function of pin |
|---|---|
| I/O₀∼I/O₇ | I/O₀~I/O₇ I/O₀∼I/O₇ pin is used for inputting command, address, data and outputting data when reading. |
| CLE | COMMAND LATCH ENABLE When CLE is activated, the inputted data is a command. |
| ALE | ADDRESS LATCH ENABLE When ALE is activated, the inputted data is an address. |
| CS | CHIP SELECT Only when the input end is at the active level, will the chip enter into an operating state to realize the input and output of data. |
| WE | WRITE ENABLE WE controls input at I/O end. When WE is activated, input is allowed. Command, address and data latch are at the rising edge or falling edge of the WE pulse. |
| RE | READ ENABLE RE controls input at I/O end. When WE is activated, it is allowed to output to I/O. |

Generally speaking, when pin ALE is active, bus interface 116 of virtual NAND flash memory receives address data from pin I/O0∼I/O7, when pin CLE is active, bus interface 116 of virtual NAND flash memory receives command from pin I/O0∼I/O7 and temporarily stores the command into the command register of register block 103, when pin WE is active, the bar code image can be input into the data register of register block 103 via pin I/O0∼I/O7 of bus interface 116 of virtual NAND flash memory. Master logic module 101 can obtain the bar code image from the data register of register block 103 according to the command, and transfer it to data memory 104. Furthermore, when master logic module 101 reads processing commands from the command register of register block 103, the bar code image in data memory 104 can be transferred to bar code decoding pipeline 102 for decoding processing.

In the implementation example of the present invention, USB interface unit 10 includes flash memory data control module 117, microprocessor 119, USB (Universal Serial BUS) controller 118 and USB interface 120. It is worth noting, by way of example and not limitation, that in many practical implementations flash memory data control module 117, microprocessor 119 and USB controller 118 can be either a separate module or a module integrated with each other, while USB interface 120 is usually a portable external interface.

Bus interface 116 of virtual NAND flash memory is electrically connected to flash memory data control module 117, enabling flash memory data control module 117 to identify bus interface 116 of virtual NAND flash memory and its subsequent register block 103, master logic module 101, bar code decoding pipeline 102, data memory 104 as the available NAND flash memory. Thus bus interface 116 of virtual NAND flash memory and its subsequent register block 103, master logic module 101, bar code decoding pipeline 102 and data memory 104 are virtualized into the available NAND flash memory and its read write operation is controlled by flash memory data control module 117.

Microprocessor 119 is electrically connected to flash memory data control module 117 and USB controller 118 respectively for coordinating the operating status of flash memory data control module 117 and USB controller 118. USB controller 118 is electrically connected to USB interface 120 and flash memory data control module 117 for transforming the data output from USB interface 120 in USB communication protocol into stored data for input into flash memory data control module 117 and transforming the data output from flash memory data control module 117 into data in USB communication protocol for output from USB interface 220, so as to realize data transfer between flash memory data control module 117 and USB interface 120. Flash memory data control module 117 is used for accessing bus interface 116 of virtual NAND flash memory and the input and output of data.

Those skilled in the art, depending upon the needs of the particular application, and in light of the teachings of the present invention, will readily recognize that via the above settings the exemplary bar code decoding device disclosed in the present embodiment can be electrically connected to any available device compatible with USB communication protocol via USB interface 120. After the bar code image is input from USB interface 120, depending upon the needs of the particular application, it can be transferred to bus interface 116 of virtual NAND flash memory upon transformation by USB controller 118. Bus interface 116 of virtual NAND flash memory temporarily stores the bar code image into register block 103. Master logic module 101 obtains the bar code image from the data register and stores it into data memory 104. After master logic module 101 receives the processing command from the command register, it may transfer the bar code image in data memory 104 to bar code decoding pipeline 102 for the decoding operation of the bar code decoding pipeline, and output operation results to bus interface 116 of virtual NAND flash memory after the completion of the operation. Flash memory data control module 117 reads the operation results and transforms them into data in USB communication protocol for output to USB interface 120, from which, by way of example and not limitation, any device compatible with the USB communication protocol can obtain the operation results.

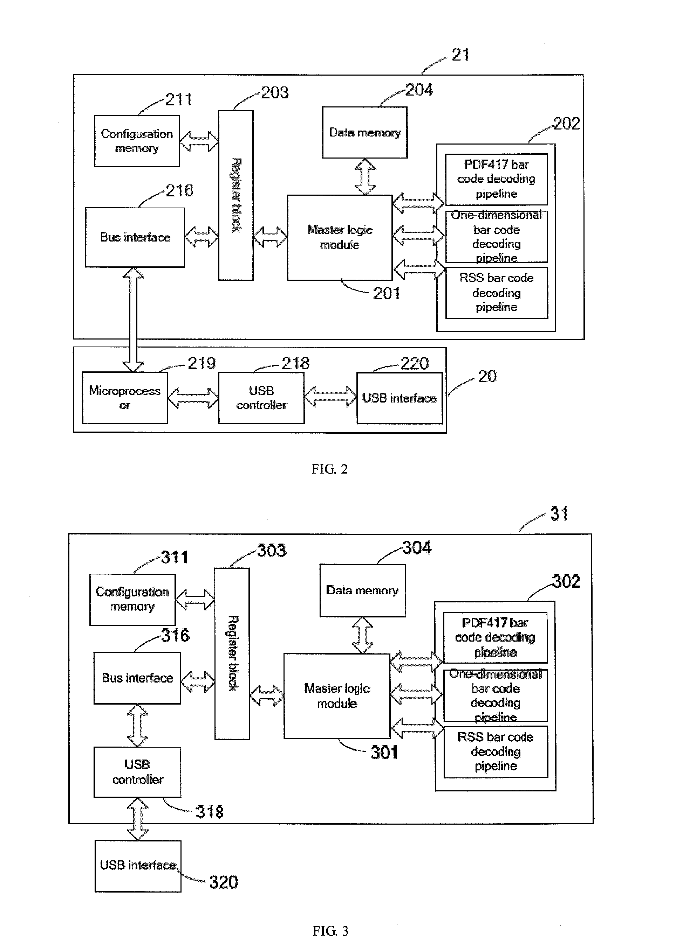

Next, please refer to FIG. 2. FIG. 2 illustrates a schematic block diagram of an exemplary bar code decoding device according to a second embodiment of the present invention.

In the implementation example, bar code decoding unit 21 includes bus interface 216, configuration memory 211, register block 203, master logic module 201, bar code decoding pipeline 202 and data memory 204. In which, the function of configuration memory 211, register block 203, master logic module 201, bar code decoding pipeline 202 and data memory 204 is the same as that of the first embodiment of the present invention. The difference lies in that, in the implementation example, bus interface 116 of virtual NAND flash memory is replaced by bus interface 216, which has a wider applicability than the bus interface of virtual NAND flash memory.

In accordance with the present embodiment, USB interface unit 20 includes microprocessor 219, USB controller 218 and USB interface 220. In which, microprocessor 219 is electrically connected to bus interface 216 and USB controller 218 respectively for coordinating the operating status of bus interface 216 and USB controller 218; USB controller 218 is used for transforming the data input by USB interface 220 in USB communication protocol into a data format readable by the bar code decoding unit, which will be input into bar code decoding unit 10 via microprocessor 219, and transforming the data output from microprocessor 219 into data in USB communication protocol for output from USB interface 220; USB interface 220 is connected to USB controller 218 for the input and output of data. It is worth noting that, by way of example and not limitation, depending upon the needs of the particular application, microprocessor 219 and USB controller 218 can be either a separate module or a module integrated with each other, while USB interface 220 is usually a portable external interface. Compared with the first implementation example, this implementation example greatly simplifies the complexity of the bar code decoding device for many practical applications.

Next, please refer to FIG. 3. FIG. 3 illustrates a schematic block diagram of an exemplary bar code decoding device according to a third embodiment of the present invention.

The present embodiment is similar to the first and second ones except, at least, as noted in the following description. Bar code decoding unit 31 includes bus interface 316, USB controller 318, configuration memory 311, register block 303, master logic module 301, bar code decoding pipeline 302 and data memory 304. In which, the function of bus interface 316, USB controller 318, configuration memory 311, register block 303, master logic module 301, bar code decoding pipeline 302 and data memory 304 is the same as that of the first and the second implementation examples, except that USB interface unit 30 only includes USB interface 320. It is worth noting, by way of example and not limitation, that, in the implementation example, USB controller 318 is directly connected to bus interface 316 and it is integrated into the bar code decoding unit, by which, in many practical applications, the portability of the bar code decoding device is improved.

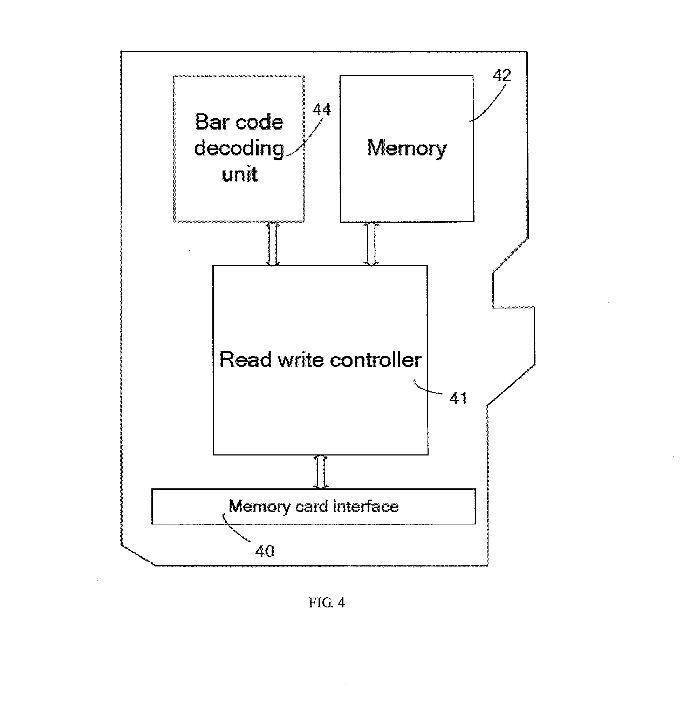

Next, please refer to FIG 4. FIG. 4 illustrates a schematic block diagram of an exemplary bar code decoding device according to a fourth embodiment of the present invention.

Generally speaking, by way of example and not limitation, various types of memory cards, such as market available CF (Compact Flash) Card, MMC (MultiMedia Card), SD Card (Secure Digital), Micro SD Card, Mini SD Card and SM Card (Smart Media), include memory card interface 40, read write controller 41 and memory 42. The bar code decoding device of the present embodiment is configured to be operable with these memory cards. Depending upon the needs of the particular application, bar code decoding unit 44 may be added to these memory cards to enable real-time decoding of memory cards.

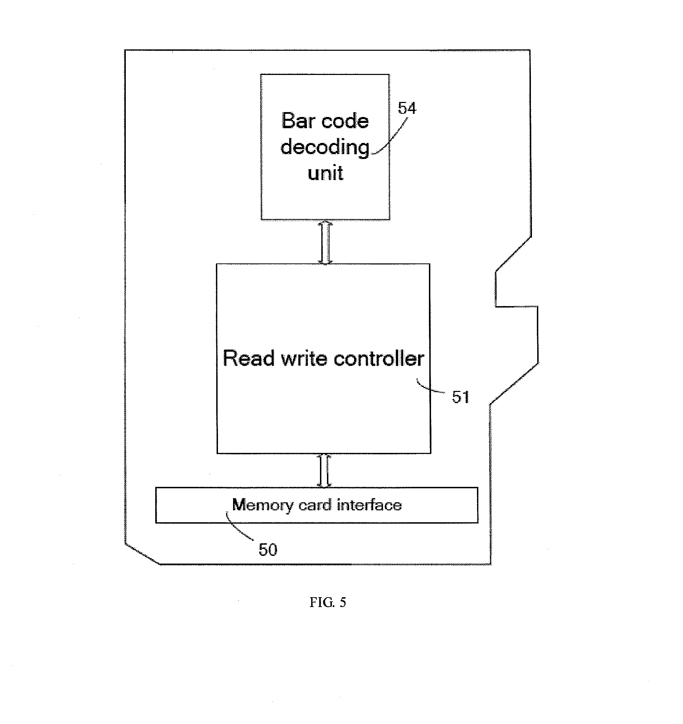

Next, please refer to FIG 5. FIG. 5 illustrates a schematic block diagram of an exemplary bar code decoding device according to a fifth embodiment of the present invention.

In the present embodiment, the bar code decoding device includes, without limitation, memory card interface 50, read write controller 51 and memory-card-type special decoding device of bar code decoding unit 54.

In the fourth and fifth embodiments, by way of example and not limitation, bar code decoding units 44 and 54 may be realized by the bar code decoding units 44 and 54 in the first to third embodiments.

Those skilled in the art, depending upon the needs of the particular application will readily recognize that a portable bar code decoding device may be achieved in light of the teachings of the present invention. By way of example and not limitation, in many practical implementations, users can simply input the bar code image into the bar code decoding unit through the interface unit to obtain the corresponding decoded result and typically improve the portability of the bar code decoding device. In addition, by way of example and not limitation, in many practical applications, the available device can be used in conjunction with the bar code decoding device equipment without any changes, increasing the application scope and flexibility of the bar code decoding device. Meanwhile, hardware decoding methods similar to parallel decoding may be used depending upon the needs of the particular application, and, without limitation, a faster decoding speed than that of available software may be achieved for many practical implementations.

By way of example and not limitation, depending upon the needs of the particular application, a bar code decoding processing pipeline configured according to the present embodiment may be composed purely of hardware structures are much harder to crack by reverse engineering, thereby generally achieving higher security. Furthermore, in at least some embodiments, the bar code decoding unit may be integrated with a USB interface and other interfaces, which, for many practical applications, enables the input of a bar code image from an interface and real-time decoding.

Having fully described at least one embodiment of the present invention, other equivalent or alternative methods of bar code decoding devices according to the present invention will be apparent to those skilled in the art. The invention has been described above by way of illustration, and the specific embodiments disclosed are not intended to limit the invention to the particular forms disclosed. The invention is thus to cover all modifications, equivalents, and alternatives falling within the spirit and scope of the following claims.

Claim elements and steps herein may have been numbered and/or lettered solely as an aid in readability and understanding. Any such numbering and lettering in itself is not intended to and should not be taken to indicate the ordering of elements and/or steps in the claims.

## Claims

1. A bar code decoding device, **characterised in that** comprising:
Interface unit;
A bar code decoding unit is electrically connected to its interface unit, the bar code image is input into the bar code decoding unit via the interface unit and the bar code decoding unit decodes the bar code image and outputs decoded information via its interface unit.

2. The bar code decoding device of claim 1, **characterised in that** the bar code decoding unit comprising:
A data memory for storing the bar code image;
A register block, including a command register, which is used for temporary storage of commands, and a data register, which is used for temporary storage of data;
A bar code decoding pipeline for processing the bar code image;
A master logic module, which obtains processing commands from the command register, and transfers the bar code image stored in the data memory to the bar code decoding pipeline for decoding according to the processing command, and;
A bus interface of virtual NAND flash memory, electrically connected to the register block for transferring data in line with an interface standard of NAND flash memory so as to enable communication between the bar code decoding unit and the interface unit.

3. The bar code decoding device of claim 2, **characterised in that** the data memory which realized by RAM (random access memory) stores the bar code image obtained from exterior of the bar code decoding unit.

4. The bar code decoding device of claim 2, **characterised in that** the bus interface of virtual NAND flash memory is connected to an external circuit of bar code decoding unit and communicates with the external circuit to transfer data in the interface standard of NAND flash memory.

5. The bar code decoding device of claim 2, **characterised in that** the bar code decoding unit comprising:
multiple bar code decoding pipelines realized by hardware logic and parallel processing of the bar code image by the multiple bar code decoding pipelines.

6. The bar code decoding device of claim 2, **characterised in that** the interface unit comprising:
A flash memory data control module, electrically connected to the bus interface of virtual NAND flash memory for accessing the bus interface of virtual NAND flash memory and inputting and outputting the data in line with interface standard of NAND flash memory;
A USB controller, electrically connected to its flash memory data control module for transforming the input data back and forth from the USB communication protocol into the interface standard of NAND flash memory and inputting it into the flash memory control module and transforming this data from the interface standard of NAND flash memory output from the flash memory data control module into the USB communication protocol;
A USB interface, electrically connected to the USB controller for input and output of data in the USB communication protocol;
A microprocessor, electrically connected to the flash memory control module and the USB controller respectively for coordination of the operating state of the flash memory control module and the USB controller.

7. The bar code decoding device of claim 1, **characterised in that** the bar code decoding unit comprising:
A data memory for storing the bar code image;
A register block, including a command register, which is used for temporary storage of commands, and a data register, which is used for the temporary storage of data;
A bar code decoding pipeline for processing the bar code image;
A master logic module, which obtains processing commands from the command register, and makes the bar code decoding pipeline to decode the bar code image stored in the data memory according to the processing command, and;
An input/output interface, electrically connected to the register block so as to enable communication between the bar code decoding unit and the interface unit.

8. The bar code decoding device of claim 7, **characterised in that** the interface unit comprising:
A USB controller, electrically connected to the input/output interface for transforming the input data to and from the USB communication protocol into stored data and input it into the flash memory control module and transforming the data output from the flash memory data control module into the USB communication protocol for output;
A USB interface, electrically connected to the USB controller for the input and output of data.

9. The bar code decoding device of claim 8, **characterised in that** the USB controller is integrated into the bar code decoding unit.

10. The bar code decoding device of claim 1, **characterised in that** the bar code decoding device further comprises a read write controller, the interface unit comprises a memory card interface, the bar code decoding unit is electrically connected to the read write controller, the read write controller inputs the bar code image into the bar code decoding unit via the memory card interface for decoding the bar code image and acquires a decoded information of the bar code image, then outputs the decoded information via the memory card interface.

11. The bar code decoding device of claim 10, **characterised in that** the bar code decoding unit comprising:
A data memory for storing the bar code image;
A register block, including a command register, which is used for temporary storage of commands, and a data register, which is used for temporary storage of data;
A bar code decoding pipeline for processing the bar code image;
A master logic module, which obtains processing commands from the command register, and transfers the bar code image stored in the data memory to the bar code decoding pipeline for decoding according to the processing command, and;
A bus interface of virtual NAND flash memory, electrically connected to the register block for transferring data in line with an interface standard of NAND flash memory so as to enable communication between the bar code decoding unit and the read write controller.

12. The bar code decoding device of claim 11, **characterised in that** the read write controller comprising:
A flash memory data control module, electrically connected to the bus interface of virtual NAND flash memory for accessing the bus interface of virtual NAND flash memory and inputting and outputting the data in line with interface standard of NAND flash memory;
A memory card controller, electrically connected to its flash memory data control module for transforming the input data back and forth from the memory card communication protocol into the interface standard of NAND flash memory and inputting it into the flash memory control module and transforming this data from the interface standard of NAND flash memory output from the flash memory data control module into the memory card communication protocol;
A microprocessor, electrically connected to the flash memory control module and the memory card controller respectively for coordination of the operating state of the flash memory control module and the memory card controller.

13. The bar code decoding device of claim 10, **characterised in that** the bar code decoding unit comprising:
A data memory for storing the bar code image;
A register block, including a command register, which is used for temporary storage of commands, and a data register, which is used for the temporary storage of data;
A bar code decoding pipeline for processing the bar code image;
A master logic module, which obtains processing commands from the command register, and makes the bar code decoding pipeline to decode the bar code image stored in the data memory according to the processing command, and;
An input/output interface, electrically connected to the register block so as to enable communication between the bar code decoding unit and the read write controller.

14. The bar code decoding device of claim 13, **characterised in that** the read write controller comprising:
A memory card controller, electrically connected to the input/output interface for transforming the input data to and from the memory card communication protocol into stored data and input it into the bar code decoding unit and transforming the data output from bar code decoding unit into the memory card communication protocol for output.

15. The bar code decoding device of claim 10, **characterised in that** the bar code decoding device further comprising:
A memory, electrically connected to the read write controller for receiving a data of the memory card interface or the decoded information.
